# EUROPEAN PATENT APPLICATION

(11) **EP 0 614 151 A1**
(43) Date of publication of application: **07.09.1994**
(21) Application number: 93480017.8
(22) Date of filing: 02.03.1993
(51) Int. Cl.: G06F 15/56, H04L 12/24

(54) **Information management process for cable network with automatic generation of graphic applications**

(71) Applicant: International Business Machines Corporation, Armonk, N.Y. 10504 (US)
(72) Inventor: Monteil, Gérard, F-06250 Mougings (FR)
(74) Representative: de Pena, Alain

(57) **Abstract**

The present invention is an information management method implemented in a data processing system and designed specifically for telecommunication or power networks. The heart of the system is a relational Database (151) structured according to a logical representation of the network. This logical representation or Data Model (152) determines all the rules which govern the different types of components and their Relationships in the network. In this unique and consitent Database (151) is stored all the information about the location and content of the outside plant, the background geographic maps, detailed drawings, alpha-numeric descriptive data ..etc. This Database structure allows the user to design and create, by means of an apropriate interface (154), his own telecommunications business applications (153). The user can scan existing maps or drawings by means of a scanner (155) or manually digitize data with the help of a graphic mouse or pen (156). It can manipulate data in a number of way and represent the network in different contexts, for example in the form of a network map, schematic view, report or work order on a graphic display (157), a printer (158) or a plotter (159).

## Description

### Technical field

The present invention relates to a method for managing private or public telecommunication or power outside plant networks, and more particularly to a method in a data processing system for describing and modelizing a cable network and for automatically generating applications to design, represent, analyse and simulate the network.

### Background art

Telecommunications companies, private and public, today see two trends and one fact related to their outside plant network :
· Trends :
   ■ The outside plant has become increasingly complex, with much higher density and a much more varied cable structure. In addition, greater cable capacity and network traffic makes more important than ever that a network is fully operational and fully utilized.
   ■ Service demands increase. Throughout the world, the competitive threat for old and new telecommunications companies increases on all fronts. As telecommunications usage increase, national regulatory agencies, business and personal customers demand and need quicker response times, less down-time, and new products and services.
· Fact :
   ■ The outside plant represents the largest investment of a telecommunications company. Thus, the outside plant must be used and maintained for maximum utilization and return.

The information, in term of elements and connectivity, describing the telecommunication cable networks are exploited by the telecommunication companies at two levels :
· The physical level of the network, which represents the route taken by the cables, either underground or aerial.
· The logical level of the network which provides information for cable split and cables connections at the pair level.

A normal network is a "live network", in permanent evolution, from both technical reasons due to the technological progress and sociological reasons such as population evolution and need of new services. Due to the increasing size and the complexity of their network, most companies today see several problems relating to the management, manual or even computer assisted, of the growth and the maintenance of their outside plant :
· The current paper drawings are out-of-date and never reflects the network reality. There are large backlogs in the mapping or engineering departments for updates.
· The manual cross-checking of information between drawings leads to inconsistency.
· The cost of brocken lines has increases drastically on the new, higher capacity network lines. There is a need for more accurate data on the exact location of the plant to avoid breakage. If a line is damaged, there is a need for much more rapid correction and possibibly rerouting.
· Currently it is too difficult to do any real testing of alternative solutions for network extensions, resulting in investments that are possibly sub-optimal.
· The marketing has very little information about free capacity on the network, which it needs to target customers in specific areas with specific products.
· In several countries, installation of the outside plant is mostly completed, and there is a shift from new installations toward maintenance of the existing plant. However, few companies can currently efficiently and accurately identify and schedule routine maintenance to their network.

Several companies have attempted to solve some of these problems by computerization of the mapping or engineering function. However, they normally discover some of the limitations with the existing technology in this field :
· A very long time is spent capturing the existing maps and other data before the system become usable.
· Maps are still stored by sheet, not utilizing the possible benefit of a sheet-independent mapbase.
· The systems will only capture the graphic representation of the information, with a possibility of annotating text, numbers, or drawings to the different graphic elements. The system itself has no knowledge about the relationship between, say, a twisted pair and a cable, or a cable and a conduit. As a result,
   ■ It is very difficult and time-consuming to make the data available to others and to new users who may want the information in a new form.
   ■ adding a new technology to the network requires a series of long and difficult changes to the system.
   ■ any error and consistency checking must be done externally to the system.

The modern telecommunications companies today, must utilize their cable network to the fullest : new network extensions must be planned thoroughly and alternatives compared. The network must operate close to capacity, cable breakages must be reduced to a minimum, and rerouting and repairs must be completed as quickly as possible, with the smallest possible delays and at the lowest possible cost. Unused network capacity must be marketed. Plant maintenance must be scheduled efficiently. Company strategic decisions must consider plant implications and investment. This environment demands a new approch for the management of the outside plant :
· All the relevant information about the network must be easily available for all potential users. Outside plant management is not only a mapping or drawing department problem - several other groups inside and outside the company need this information.
· The information about the outside plant must be correct and up-to-date.
· The information system must be able to grow with the company, rapidly incorporating new outside plant technologies and the increasing knowledge about the network, as well as adopting new developments in computer technology as they become available.

### Summary of the invention

The present invention is implemented in a data processing system designed around a relational **Database** containing all information related to the network and procedures used to maintain or to modify it. Both Base Map information, which provides the geographical reference for the network, and all relevant information on connections and components, detail drawings, descriptive data, are held in this unique and consistent Database whose structure is based upon a user-defined logical **Data Model**. This Data Model determines all the rules which govern the different **Types** of components and their respective **Relationships** in the network. The problem of the cable network representation and management is solved by a fully automated and centralized generation of the information. When a modification, suppression or addition, is done on the network, the relational Database containing all the physical and logical information is updated. The information is changed in only one place in the Database, no matter on how many drawings this information has to be reflected. Then, the fact that one network change appears in only one place in the Database guarantees the consistency of the information. More, an automatic generation of application, such as drawings, ensures an easy update of the network avoiding, for instance, multiple modifications on complex drawings.

The traditional information systems were realized to manage complex representations of graphic and textual material on screens and hard copy output devices with little regard for the data's content or meaning. As a matter of fact, these systems were only providing a convenient form of "electronic paper" with limited facilities for update and limited interfaces to other applicative systems. The present invention extends the fundamental facilities of traditional systems by storing intelligence about the "meaning" of the data stored in the Database. This intelligence lies in the Data Model, and allows the system to provide industry-specific and customer specific applications with an ease and efficiency not possible with traditional systems. The invention accurately represents the real world, offers a more natural human interface, evolves with the the network and can be used accross multiple activities and disciplines within the company. The method according to the present invention is characterized by two major stages :
· the Database structuring :
   The telecommunication network is described in the Database in the form of **Objects**. The Database contains not only the definition of the network Objects, but also the necessary Relationships between Objects in order to logically describe the network connectivity. The description of the network involves the steps of :
   ■ defining network Object Types and associating real network elements to said Object Types,
   ■ defining Attributes belonging to each Object type and Relationships between said different Object Types,
   ■ defining network levels and hierarchical Relationships between Object Types,
   ■ associating said Objects to said network levels, each of said objects being associated to only one network level,
   ■ determining geographical Position of said Objects,
   ■ defining quantitative Relationships between said Objects,
   ■ defining presentation rules for said Objects,
   ■ determining validation rules.
   ■ storing the information generated in all preceding steps in said common and unique Database.
· the automatic generation of applications :
   The applications used to create, design, represent, and manage the telecommunication network interact directly with the Database ensuring that the the position and Relationships of the Objects are always logically correct and consistent according to the model rules previously defined.
   ■ The **Error Checking** application gives the possibility to check inconsistencies and errors that may arise during registration and maintenance of the network data.
   ■ The **Database Query** application gives a highly flexible tool to search, select and retrieve information of the Database
   ■ The **Network Tracing** application evaluates the different path alternatives inside a given network level.
   ■ The **Network Statistic** application highlights under-utilized assets to effectively manage new network extensions.
   ■ The **Network Planning** application simulates alternative networks not yet implemented.
   ■ The **Document Management** application generates user defined standard documents.
   ■ The **Graphic** application generates schematic representation of the network based on a set of presentation rules and methods using standard algorithm graph theories.

### Description of the drawings

Figure 1 describes the division of the network into Edge Objects and Node Objects in accordance with the present invention.

Figure 2 illustrates the hierarchical structure of the network in accordance with the Data Model rules claimed in the present invention.

Figure 3 illustrates the hierarchical Relationships between Objects of different levels in accordance with the Data Model rules claimed in the present invention.

Figure 4 illustrates the Object positionning at the Track Network level in accordance with the Data Model rules claimed in the present invention.

Figure 5 illustrates the interconnection and Relationships between network levels and Objects in accordance with the Data Model rules claimed in the present invention.

Figure 6 illustrates the automatic generation of a Geographical Cable Drawing in accordance with the present invention.

Figure 7 illustrates the automatic generation of an Orthogonal Cable Drawing with a true geographical positioning in accordance with the present invention.

Figure 8 illustrates the automatic generation of an Orthogonal Cable Drawing with a relative positioning in accordance with the present invention.

Figure 9 illustrates the automatic generation of a Semi-Geographical Cable Drawing in accordance with the present invention.

Figure 10 illustrates the automatic generation of a Logically Oriented Cable Drawing in accordance with the present invention.

Figure 11 illustrates the automatic generation of a Cross-Section View of a Track Section in accordance with the present invention.

Figure 12 illustrates the Layout Data Structure implemented in the Cable Drawings in accordance with the present invention.

Figure 13 illustrates a sequence of connected Track Nodes and Track Sections along the path of a cable in accordance with the present invention.

Figure 14 illustrates reduction of Cables crossing by sorting the Cables in accordance with the present invention.

Figure 15 illustrates the general concept of the invention and specially the Relationships between Database, Data Model and applicative environment within the data processing system.

Figure 16 illustrates the representation of all possible paths in Logically Oriented Cable Drawing's in accordance with the present invention.

Figure 17 illustrates the Layout Matrix in Logically Oriented Cable Drawings in accordance with the present invention.

### Description of the preferred embodiment of the invention

### The Network Data Model

In the "real world", a telecommunication network is composed of telephone lines (overhead and underground), transmitters and receivers, exchanges, junction boxes, and so on, and traditionally, all this network information is represented on maps and documents. This means that when new information is to be added to the network or existing information requires updating, valuable time is used updating the "paperwork". For example, if a distribution box is to be moved, then all cables which are connected to that particular distribution box also have to be moved. Traditionally, this would mean several hours work updating the appropriate map and any references to the location of the distribution box in other documents. However, if this distribution box is stored in an unique relational Database according the present invention, then all that is required is to update the position of the distribution box in the system. All references to that distribution box's position are then updated automatically. This is possible because each individual cable, exchange, junction box and any other item which comprises the telecommunications network is stored in the Database as an interconnected object whose relationships which other objects in the network respond to rules pre-defined in a Data Model. The Data Model is used to ensure a comprehensive description of the network as perceived by the user. Any telecommunication network can be represented as a collection of interconnected **Objects** :
· each Object belongs to a particular **Type**, and
· each component in the network can be described as a specific occurence of a particular Object Type.

Definition and occurence of Object Types must be differentiated. The definition of an Object Type determine which kind of Object is used, whereas an occurence of an Object Type refers to a real Object. The definition corresponds to the "literary"' definition of an Object, say, a Cable, and the occurence refers to an actual Cable between two specific Manholes in a particular village.

The information contained in the Database is organized in a **hierarchical** structure. This means that some Object Types can be found at the top of the Database Hierarchy and others at the bottom. The Position of an Object Type in the Hierarchy is determined by the Data Model. Each Object stored in the Database has an Object identification and a set of properties including :
· **Position**, which determines the geographical location of the Object in the network. Some Objects have a Position while others are given their Position by related Objects.
· **Attributes**, which provide information about the Object that is stored in the Database. Some Attributes are mandatory while others are optional.
· **Relationships**, which determine the Relationship between the Object in question and other Objects in the network. Objects do not exist alone, but are related to other Objects.

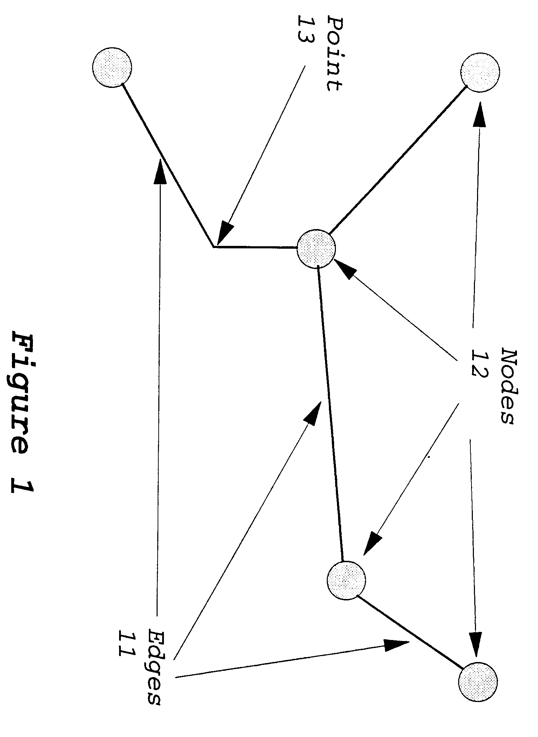

Regarding the network as a collection of Objects, Figure 1 illustrates, in a simplified form, the division of Objects into two families : the **Edge** Objects (11) and **Node** Objects (12). The start and end point of an Edge Object (11) is a Node (12) and the Node Objects (12) connect the Edge Objects (11). A Node may have a geographical Position as a set of coordinates, or it may be positioned by its Relationship to another Node Object. Whereas Nodes are the only Objects whose Positions can be described by single sets of x, y, z coordinates, Edges can only be positioned relative to other Objects. Edges are connections between two Nodes, and they provide a logical path between two Objects. In addition to its start and end Node, an Edge Object may also have intermediate Positions represented as a **Point** (13). Points are considered as Nodes without connections. The interdependence between Edge (11) and Node Objects (12, 13) is described as a logical Relationship in the network. The logical Data Model related to the present invention is generic which means that the relational Database can be modelized in accordance with the individual requirements of the telecommunication network in question. It allows a comprehensive description of the specific telecommunications network which can be easily adapted to meet increasing demands on the network and or to comply with new user applications. The Data Model is an abstraction of the real network. It defines specific categories of components (Object Types) in the network and Relationship between them through a set of rules. For example, each Object Type is defined by a set of Attributes that determine the information which can be stored in the Database. Each Attribute has a limited number of valid values and can be either mandatory or optional.

The rules used by the Data Model to describe the network components with their Attributes and Relationships are defined by means of the eight following steps :

### 1. DEFINITION OF THE NETWORK OBJECT TYPES AND ASSOCIATION OF THE REAL NETWORK ELEMENTS TO THESE OBJECT TYPES :

Three things must be pointed out : first of all, the network is a collection of Objects, secondly, each element in a network can be described as a specific occurence of a particular Object Type, and lastly this specific occurrence is called an Object. Consequently, the basic elements of information in the telecommunication Database are the predefined Objects. The invention can operates with a large number of Object Types defined by the user, as for example :
· Connection Point,
· Node,
· Component,
· Track Section,
· Track Node,
· Cable ..etc.

The occurence in the network of the Object Type **Connection Point** may, for example, be in the form of the following network elements : Subscriber, End Amplifier, Distribution Box, Intermediate Amplifier, Remote Transmission Unit and Rack. The Object Type **Node** may occur in the form of : Amplifier, Cable End, Line Concentrator, and Regenerator. **Component** may occur as different network elements, for example : extension, Line Transformer, Separator Transformer, and Coil. Finally, the occurences in the network of the Object Types **Track Section** and **Track Node** may be in the forms of the network elements Track Section and Track Node respectively.

**Note** : These examples of Object Type occurences do not represent an exhaustive list. Even though it may look like it from the above mentioned examples, Object Types do not necessarily describe physical elements. Other aspects of the network and network management may be modelized as Object Types.

### 2. DEFINITION OF THE ATTRIBUTES BELONGING TO EACH OBJECT TYPE AND RELATIONSHIPS BETWEEN SAID DIFFERENT OBJECT TYPES :

When the different Object Types in the telecommunications network have been identified, the next step will be to describe each Object and its Relationships with the other interconnected Objects. A typical description of an Object Type includes the following information :
· The definition of the Object Type and its Attributes.
· The Database Relationships which may exist between varying Types of Objects.

An Object is defined in detail by a set of physical features called **Attributes**. For example, an Object Type **Cable** can have several Attributes such as installation date, length, number of pairs, ..etc. . An important aspect of an Attribute is whether it is mandatory or optional. If an Attribute is mandatory, it requires a valid value before the Object can be stored in the Database. An Object may have a limited number of values for each mandatory Attribute or it may have free text. The restriction varies according to the needs of the users : for example, for come Attributes the only restriction is the number of characters, and for others only a precise value is allowed. For an optional Attribute, it makes no no difference if the value is specified or not. Nevertheless, even though the information is not required for the Object to be stored, it may still be relevant and helpful to the users.

Apart from its Attributes, each Object can have Relationships, this means that when an Object is stored, it may be related to other Objects in the Database by a Database Relationship. The norm is that Objects do not exist in an isolated state, but are related to other Objects. For example, the Object Type **Cable** can have several relations such as a relation of Position with a **Track Section** Object, a relation of connectivity with other **Cable** Objects, ..etc. . A single Object may be related to none, one or more Objects. The following Types of Relationships may exist between stored Objects in the Database :
· Positions or is positioned by
· Groups or is grouped by
· Serves or is served by
· Describes or is described by
· Contains or is contained in
· Owns or belongs to
· Connects or is connected to ..etc.

### 3. DEFINITION OF THE NETWORK LEVELS AND HIERARCHICAL RELATIONSHIPS BETWEEN OBJECT TYPES :

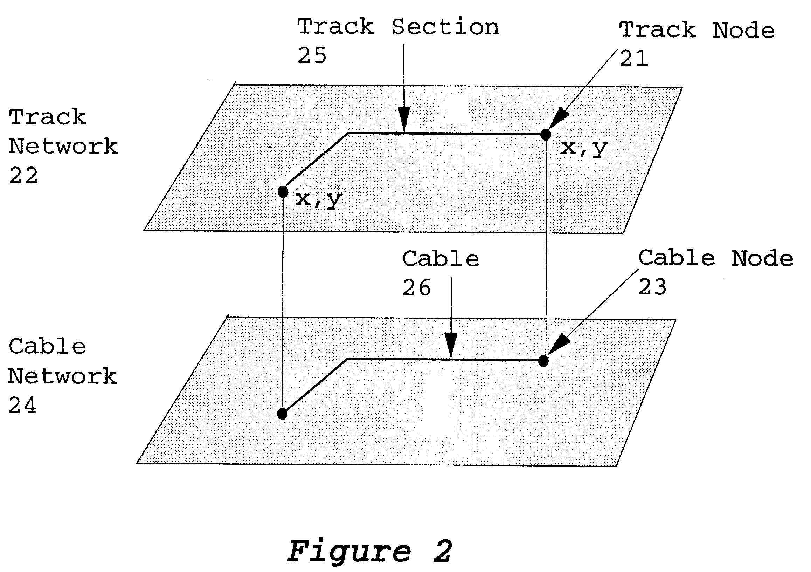

In the **Database Hierarchy** an Object which positions, groups, serves, describes ..etc. another Object is usually located, in the Database Hierarchy, above the Object which is positioned by, grouped by, served by, described by ..etc. another Object. For example, Figure 2 shows a mandatory Relationship between, two levels in the Database Hierarchy. In this case it concerns Nodes (21) at the **Track Network** level (22) and Nodes (23) at the **Cable Network** level (24). The Cable Nodes (23), which are situated below the Track Nodes (21) in the Hierarchy, get their Positions from the Track Nodes to which they are related. Objects which are connected to or from other Objects are located at the same level in the Hierarchy.

The rules of the Data Model determine the types of Relationships which may exist between Objects. For example, Track Nodes (21) are the only Types of Objects which have an absolute Position. As all Objects stored in the Database, such as the Track Sections (25), Cables (26), Cables Nodes (23), must have a Position, they are given their Positions (x, y), as Relationship to the Track Nodes (21). This means that the Track Nodes are always positioned at the top level in the Database Hierarchy.

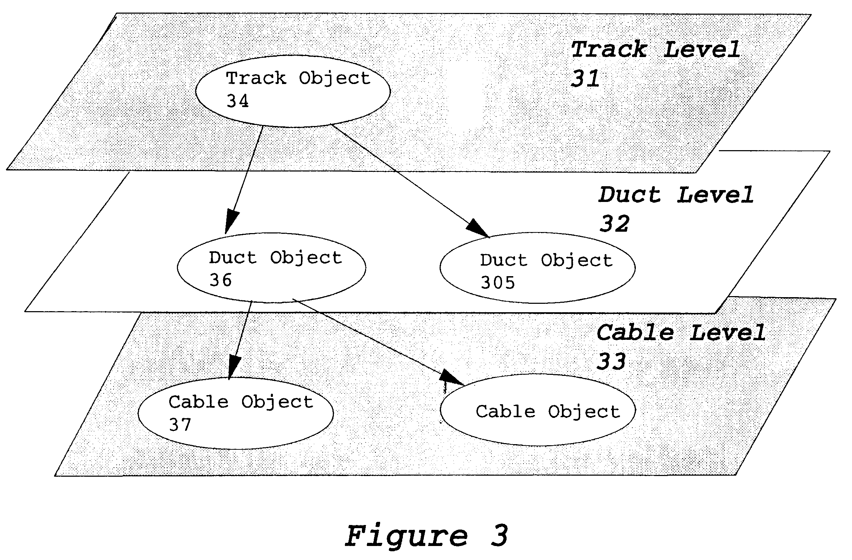

So far only functional Relationships between Objects have been dealt with. In addition to this Type of Relationship, the telecommunications network, as illustrated in Figure 3, is divided into several different network levels as, for example, the **Track Network** (31), **Duct Network** (32), **Cable Network** (33). The Objects at these network levels are connected to one another through a hierarchical structure. Thus, an Object owns one or more Objects belonging to a lower level in the structure. Each Object Type is assigned to only one of the network levels. If several network levels are involved, then Track Network Objects (34) are always at the top of the hierarchical structure and Duct Network Objects (35, 36) lie below them. For example, a Cable (37) in the Cable Network (33) is connected to a Duct Hole (36) in the Duct Network (32). Apart from the division into three networks, a Hierarchy of this sort can have several intermediary levels. An example of this is a Duct Hole which is connected to Track Section via Duct Hole Group and Duct Section.

### 4. ASSOCIATION OF THE OBJECTS TO THE NETWORK LEVELS :

Each Object Type is assigned to only one of the network levels, that means that each of the three levels has specific Objects associated with it :
Examples of Objects associated to the three networks levels :
a. Track Network
   · Track nodes
   · Track points
   · Track sections
   · Poles ..etc.
b. Duct Network
   · Manhole
   · Duct termination
   · Tunnel
   · Duct section ..etc.
c. Cable Network
   · Cable
   · Distribution box
   · Connection point
   · Cable join
   · Cable loop ..etc.

**Note** : The examples given above do not give an exhaustive list of Object Types which can occur in a specific telecommunication network.

### 5. DETERMINATION OF THE GEOGRAPHICAL POSITION OF OBJECTS

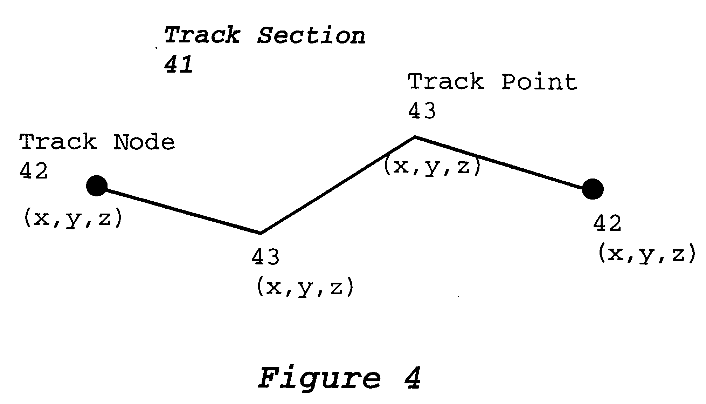

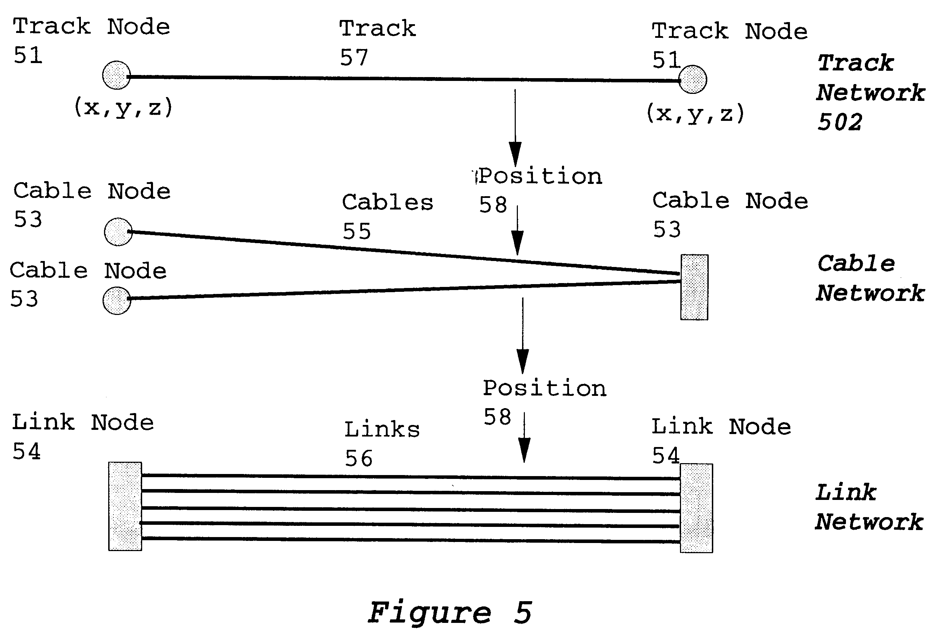

The Position determines the geographical location of an Object in the network. Some Objects have Positions whereas others are given their Position by related Objects. As a basic rule geographical Position is given at the Track Network level. Then all other Objects inherit their Position from their Relationship with Objects belonging to the Track Network level represented in Figure 4. The Track is figured as a broken line (Track Sections (41)) with a start and an end Position (Track Nodes (42)) and intermediate Positions (Track Points (43)). Figure 5 illustrates the interconnection and Relationships between network levels and Objects. An Object Position, for example the x, y and z coordinates of a Track Node (51), is generally given at Track Network (52) level. As it appears from the Figure 5, Objects (Cable Nodes (53)), Link Nodes (54), Cables (55), Links (56) .etc..) on other levels in the network inherit their Position (58) from the Track Network Object (Track Node (51), Track Section (57) .etc..) to which they are related.

### 6. DEFINITION OF THE QUANTITATIVE RELATIONSHIP BETWEEN OBJECTS

Objects may be related to other Objects in the Database by a quantitative Relationship. These Relationships expresses in term of capacity can be controlled with "Cardinal Rules" predefined in the Data Model.

The "Subject" of the Relationship is the network Object about which something is being said in the relational expression. This "expression" specifies the Type of Relationship, and the "Object" of the Relationship specifies one or more network Objects to which the "subject" is related. The cardinal rules expresses the number of "Objects" in a Relationship that can be related to the "Subject". There is a lower and an upper limit, a minimum and a maximum. The number of Relationships for each Object in the Database is expressed as :
· 1 to 1 (i.e. Duct Node to Duct Node Outline)
· 1 to N (i.e. Duct Node to Cross Section)
· N to 1 (i.e. Duct Node to Access)
· N to N (i.e. Main Duct Node to Duct Section)

The "N" implies none, one or more network Objects. For example, "N to 1" means that none, one or more "subjects" are related to one "Object", and "N to N" means that none, one or more "subjects" are related to none, one or more "Objects". The format can be expressed as (Min.,Max.). For example, (0,1) means that the "subject" does not require the "Object". However, the "subject" can never have more than one "Object". Relationships between Objects are either mandatory or optional. The format (1,1), for example, illustrates a mandatory Relationship because the "subject" requires the "Object" and vice versa. Mandatory and optional can also be expressed as "must Relationships" and "can Relationships" respectively. An example of a "must Relationship" could be a Cable connected to minimum 2 and maximum 2 Cable Nodes : the format is here (2,2). An example of a "can Relationship" would be a Cable Node connected to minimum zero and maximum "N" cables : the format is (0,N).

### 7. DEFINITION OF PRESENTATION RULES

A large part of the information handled by the user in output is in graphic form. The different graphic outputs used can be classified in four Types :
a. the geographical map, which shows the geographical location of network Objects,
b. the logical drawing, which shows the logical and electrical Relationships between network Objects,
c. the expanded view, which shows the logical connections of network Objects for example Cables in a particular Track Node, and
d. the cross-section, which shows the relative Position of network Objects for example at a particular point in a Track Section or in a Manhole.

Apart from this, a basemap can also be displayed as geographical framework for the Objects in the network.

The Data Model allows to impose the own **Presentation Rules** which govern the graphic representation of network information, that means the representation of each Object either on a workstation screen or on paper by means of a plotter or printer. The graphic representation of the Objects is context dependent due to the fact that an Object can figure in several pictures. The set of Presentation Rules is determined by the Attribute values of each Object and by the graphic Type. Depending on the Presentation Rules selected, one or more of the following graphic elements can be changed :
· Relative Positions
· Symbol
· Area pattern
· Color
· Line Type
· Text font ..etc.

### 8. DETERMINATION OF VALIDATION RULES :

The overall purpose of the **Validation Rules** is to test and determine whether Object Types, Attributes, and Relationships comply with the requirements set up in the other Data Model rules. The Validation Rules cover :
a. Validation of Object Types
b. Validation of Attributes
   This Validation Rule is used to check a number of characteristics for each Attribute and, first of all, it verifies that the Attribute only contains values within a predefined range. Secondly, it can be used to check that the Attribute lies within a set of valid attributes. Thirdly, it is used as a control to check that the entered data Type corresponds to the defined data Type, for example that letters are not entered in an integer field, and fourthly, this rule can be used to control that the entered data has the required format.
c. Validation of Relationships
   This validation can be used to control that the Relationship between Objects in the Database conform to the "Cardinal Rules". The rule can be used to check that an Object to which another Object is related has the correct Object Type and that the number of Objects related to an Object is correct.

It is important to understand that the use of all three Types of validation is not needed at once, but a combination can be defined to suit specific purposes.

### THE USER APPLICATIONS

The Data Model generates a Database structure which constitutes the start point of all applications used to create, design, represent and manage the telecommunication network. The information related to the network contains three ingredients :
1. the raw data
2. the representation of these data
3. the meaning of these data defined as the Relationships between the different elements of the network.
The Data Model integrates these ingredients allowing the data to be viewed (**represented**) in different ways, focusing on different aspects (**meaning**) of the data. The Database knows that Track Sections may contain Ducts with Cables. It knows that Tracks are not in Ducts, and Links (twisted pairs) are in Cables. The "real" knowledge of the network and its interconnected elements is contained in the Database and is directly available to the user applications which means that :
· The information is non redundant and up-to-date :
   ■ All data describing the network are stored on the same and unique Database.
   ■ all Objects inherent their Position from their Relationships at the Track level. This relative positioning reduces and simplifies the amount of information necessary to continuously update the Database with the changes occuring on the network.
   ■ All user applications are operating directly on the Objects previously defined in the Database structure. For example, no graphic information needs to be stored in the Database, the representation of the network is generated from the Objects defined according to the Data Model.
· The information is consistent and logically correct whatever the application is :
   ■ The data is extracted from a Database common for all applications.
   ■ All elements of the network, their Type, Attributes, Position and Relationships are previously checked according the Data Model rules.
· The network can be represented in different contexts depending the specific needs of the users. This allows the different groups to see the network in the way they are used to and with only the information they need.
   ■ The relative and hierarchical Position Relationships of the elements allows :
      ▲ an automatic generation of the graphics,
      ▲ a great diversity in the network representations : geographical or orthogonal drawings, logical diagrams, maps, cross sections, expanded views, detail drawings,
      ▲ the combination of geographical maps, alphanumeric forms and drawings.
   ■ Useful Data can be easily selected according to the Object Type, Attribute or Position. For example, the Cable Network in a specific geographical area, or a Cross Section view of a particular Duct Section.
· The information resident in the Database is not only descriptive but contains a logical understanding of the Relationships between the elements of the network. It is possible to represent the network through logical diagrams, to trace connections between network Nodes, to calculate distances relatively to other Objects, to plan network extensions, to detect underutilized capacity and to simulate and compare different alternatives.

The "Object Oriented" structure of the relational Database leads to a more comprehensive view of the network. It offers the possibility, through specific applications, not only to display or distribute the information but also to **manipulate** it. The result is reduced cable breakage, a more effectivelly maintained network, problems are fixed faster, network capacity is better managed and new extension are planned more effectively.

### The Consistency and Error Checking Application

The **Consistency and Error Checking** application gives the possibility to check the inconsistencies with the Data Model rules or errors that may arise during registration and maintenance of the network data. There is a large number of different tests which can be used and these tests can be restricted or not to a certain geographical area or to specific Object Types. Some tests are specifically governed by the Data Model - they belong to the **Validation rules** previously described - whereas others are more general. In this last category, the typical checkings concerns :
· Unpositioned Cables,
   This test reports all Manholes that contain Cables which are not yet positioned in a Duct and identifies the Cable.
· User given versus calculated Cable length,
   A user can enter a physically measured value for the length of a Cable. In addition, the Data model can calculate the length of a Cable. These two values may deviate, and normally this will only be acceptable within certain limits. These limits can be entered as a percentage value for the maximum deviation autorized between these two values.
· Cardinality rules, upper bound,
   An Object may be related to a maximum of Objects of another Type. The maximum is defined in the logical Data Model
· Continuous path,
   Edge Objects are connected to form a continuous path. This test reports all instances in which a Cable is located in a Track which contains Track sections that are not connected.

### The Database Query application

The **Database Query** application gives a highly flexible tool to search and retrieve information from the Database. The queries may be customized to meet specific requirements by means of search filters or search criterions based on the Database structure and the Data Model rules. The selection types can be, for example, the Object Types, Attributes, Positions, the number of Objects, specific values ..etc. An example of a query can be "find all Objects belonging to Type M with value X for Attribute A and state the values theses Objects have for Attributes B, C, and D". The result is output in a report which can be displayed graphically on a screen, printed or stored in a file or in a data collection.

### The Network Tracing application

The purpose of the **Network Tracing** application is to find Objects within a specific path at a given network level. The "Object oriented" representation of the network, the Position Relationships of the Objects and the description of the logical connections allows an automatic search and optimization of the Track, Duct or Cable paths according to criterions previously defined by the user. This application is very useful typically to evaluate different alternatives for the routing of new Cables between two predefined points within the Duct Network. The seaches may be of different Types as illustrated by the following examples :
· The general search :
   This search determines all the Objects in the network that can be reached from a specified start Object. This means that all the paths that are found have the same start Object, but not necessary the same stop Object. This application may be used to evaluate or simulate the impact on the network of specific failures like Cable breakages, Duct obstruction...
· The search of the best path :
   This search determines all the Objects which can be used to form paths between a start and stop Object. Afterwards it separates out those Objects which form the best paths according to an optimization criterion.
· The search of all possible paths :
   This seach determines the best and all the possible paths between a start and a stop Object. The connections between the two Objects can be classified according to the path length. The paths can then be displayed according to their length.
· The trace of Link Pairs :
   A **Link** is a term used to describe parallel Pairs which pass through the same Cables and which end up in the same Junction Points. A **Link Pair** is the parallel Pair or series of Pairs contained in the Link. The search Type "Trace Link Pair"is used to find all the Link Pairs at the Cable Level between two Nodes.
· The calculation of the length : It is important for planners and administrators in calculating the cost of the existing network and to estimate the amount of work required, for example, to build an extension, or perform a network upgrade. This search is used to find the exact geographical length of a specified path. More specifically, this application may also be used to assist engineers in finding the Cable length relative to a network Node. That is important in repairing Cable malfunctions because if a measuring equipment can identify the Cable length from a Node to a break point, Cables are cut in standard lengths and may have a Cable Coil at either end of the Cable.

These searches may have mandatory limitations such as :
· the network level
   The network level must be specified, for example the Track Nework. This is necessary because the Objects in the path have both a geographical and a logical connection. This selection implies that the network level determines which Object Types the start and stop Objects can belong to.
· a start Object
   A start Object is the Object from which a path search is started. Before to enter the start Object, it is necessary to specify the network level.
· an optimization
   The "best" search path varies according to the operations which the user want to carry out. Some of the possible optimization criterions which can be specified are listed hereunder :
   ■ the geographical distance,
   ■ the maximum number of Duct Holes,
   ■ the maximum number of empty Duct Holes, ..etc.

**Note:** The above lists of search Types and limitations are not exhaustive and must be considered as examples.

### The Network Statistic application

The purpose of The **Network Statistic** application is to manage the capacity of the network, and typically to target unded-utilized assets and to effectively plan new network extensions. For example, the statistics applied at the Duct Network level can provide a view of free Duct space in a particular area and can facilitate the identification of, for example, bottlenecks in the network. Typically, the use of statistics indicates the total capacity and the free capacity of each Duct Section. Thresholds can be set to highlight Track Sections where free capacity is less than a predefined value.

### The Network Planning application

The purpose of the **Network Planning** application is to work on networks that are not yet implemented. Several Planned Networks can be stored for the same area, suggesting different ways to build an network extension and allowing "what if" testings. Planned Networks and their related data are entered and manipulated in the same data structure system through the same applications as an actual network. For display and printing, the Presentation Rules of the Data Model can be set so that Planned Network Objects appear differently compared to the existing network. The parameters that can be used in this context may be :
· the colour,
· the line Type,
· the symbol Type,
· the text font, ..etc.
By using a status "planned" as a search criterion, it is also possible to display, plot and report only planned data. The implementation of different network alternatives allows an accurate and efficient comparison. Once an alternative has been chosen, the Database structure related to the Planned Network can be used to create work orders. When finished, the Planned Network can be transformed into a "live" part of the network simply by updating the status from "planned" to "existing".

### The Document Management application

The purpose of the **Document Management** application is to generate automatically documents directly from the Database. This ensures consistent and up-to-date network documentation in a format and layout based on the customer specific presentation rules. By combining a document template and user input, it is possible to create a system unique standard document to cover a specific geographical area or part of the network.

### The graphic applications

The graphic applications related to the present invention are designed to generate schematic representation of the telecommmunications network based on information on network Objects resident in the relational Database. These representations are not made up graphical information stored in the Database, but are automatically generated from the Objects previously defined in the network Database. That means that each graphic is a snapshot (life-view) of the Database at the time of the generation. The changes are reflected each time a new graphic is requested. Furthermore, a displayed drawing is always consistent with the other representations of the Database content. As previously described in the definition of the Presentation Rules, the different graphics can be distributed in four classes :
1. Geographical Drawings,
2. Logical Drawings,
3. Expanded Views,
4. Cross-Sections.
The representation of the Cable, Duct and Track Networks will illustrate the different aspects of this classification.

The purpose of the different Types of the Cable Drawing applications is to provide a logical and schematic view of the physical connection of the cables in the network according to specific Presentation Rules. The Objects diplayed in the Cable Drawings are the Cables and the Cable Nodes. These are previously selected with other features such as the Position (geographical area), specific Attributes ..etc.. The Cables and Cable Node Objects in the telecommunication Data Model, do not possess any direct position data (geographical coordinates). Their geographical locations are derivated from related Objects; the Track Section and Track Nodes Objects. The Cable Drawing uses these positioning Objects together with the Presentation Rules of the Cable Objects.

Three main Types of logical representation of the Cable Network can be defined :
· Position Oriented Cable Drawings, display the Cable Network as a function of the geographical position of the Track Network.
· Logically Oriented Cable Drawings, display the Cable Network as a function of its logical connections
· Interior (or Expanded) Track Node Cable Drawings, display only the Cable Network inside Track Nodes (example manholes), mainly as a function of its logical connection.
· Cross-Section Drawings, display the relative arrangement of the Cable and Duct Networks inside Track Sections or Track Nodes (example manholes).

### 1. POSITION ORIENTED CABLE DRAWINGS

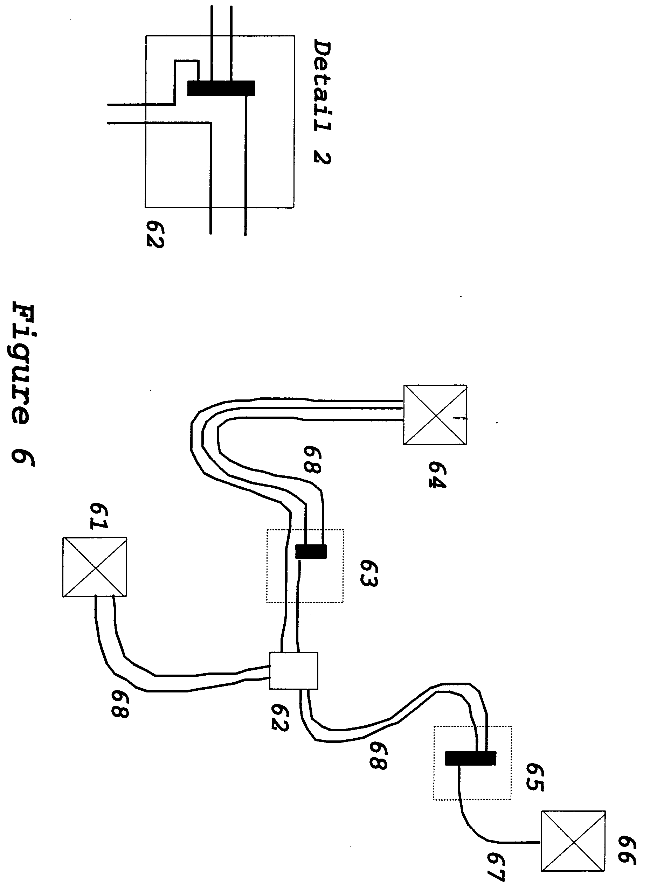

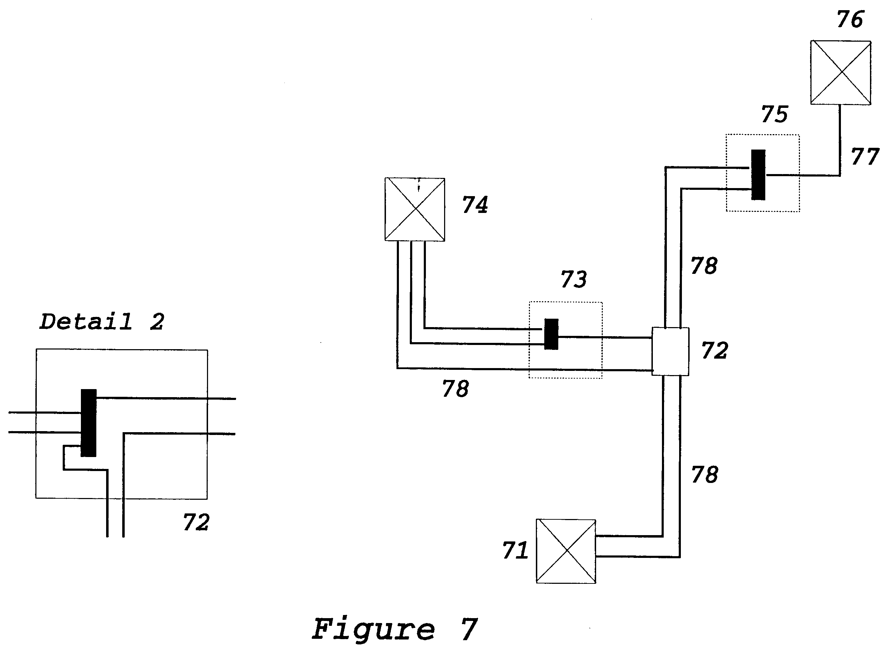

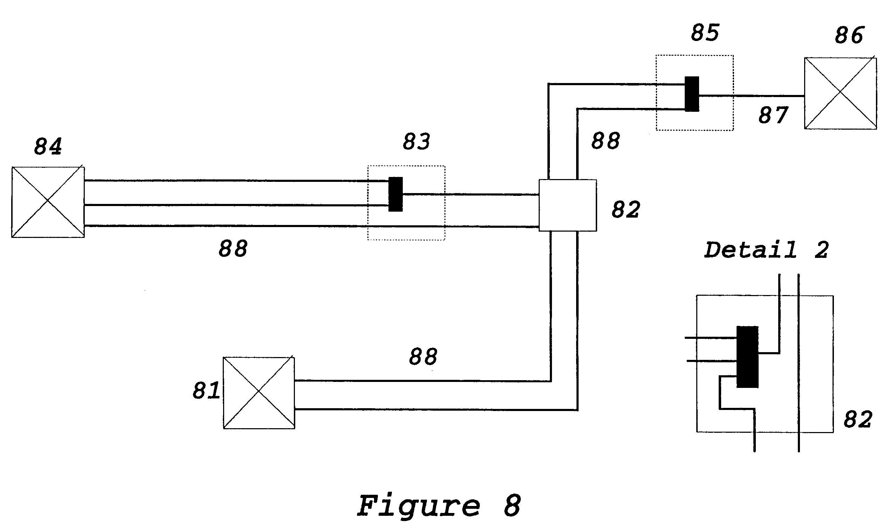

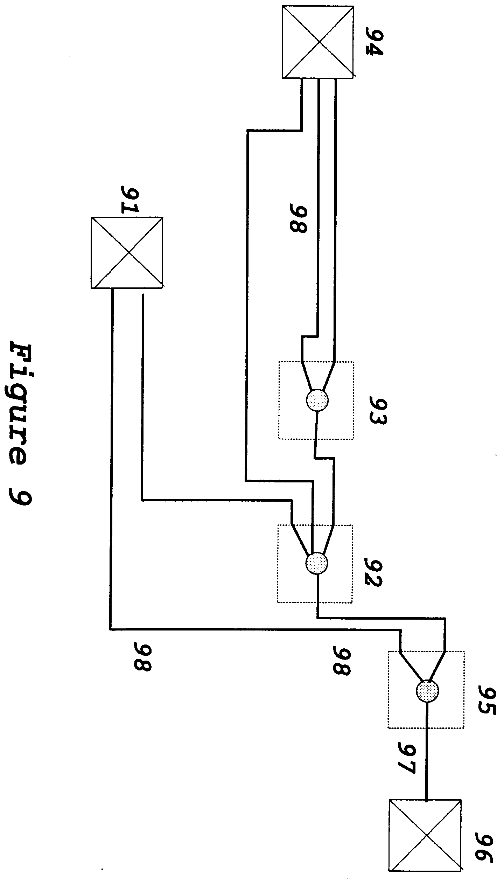

Position Oriented Cable Drawings allows the representation of the Cable Network (Cables and Cable Nodes) in a geographical area. The presentation of the network is a function of the Objects geographical location. There are several subtype of Position Oriented Cable Drawings, defined by how the presentations of the Objects relate to their geographic Positions. These relations are depending upon the different requirements of the telecommunication network operators. The subtypes can be grouped into three main groups, the Geographical, the Semi Geographical and the Orthogonal Cable Drawings.
a. Geographical Cable Drawings (Figure 6) :
   The basic rules are:
   · Nodes (61...66) are located (approximately) at their true geographical Position.
   · Cables (67, 68) ) are located (approximately) at their true geographical Position.
   · Cables following the same Track (68) will be drawn as lines parallel to the track. The names of the Cables will be drawn on the top of each Cable.
   · If Cable Nodes contain internal connections, the sub-drawing of these connections may be shown integrated with the main network (63, 65) (if not too complex), or as separate expended views placed elsewhere in the main drawing (62)
b. Orthogonal Cable Drawings (Figure 7 & 8) :
   There are different modes in which a Cable Network can be drawn orthogonally, but the basic features are:
   · Cable Nodes are located at their true geographical Position (71...76) (Figure 7), or only their relative Positions are preserved (81...86) (Figure 8).
   · Cables are drawn orthogonally (77, 78, 87, 88), and not following their true geographical Positions. The routing of Cables is performed by an algorithm which minimizes the Cables crossing.
   · Cables following the same Track route (78, 88), are drawn as parallel lines.
   · If Cable Nodes contains internal connections, the sub-drawing of these connections may be shown integrated with the main network (73, 75, 83, 85), or may be separately drawn (72, 82).
c. Semi-Geographical Cable Drawings (Figure 9) :
   In this Type of drawings, the Cables (98) from the same Track may no longer be represented in parallel. The Nodes (91...96) are semi-geographically located meaning that only east, west, north and south Relationships have to be respected when the Nodes are positioned on the drawing. Furthermore the Cables (97, 98) are orthogonally represented just as in the orthogonal mode.

### 2. LOGICALLY ORIENTED CABLE DRAWINGS (or Cable Diagram)

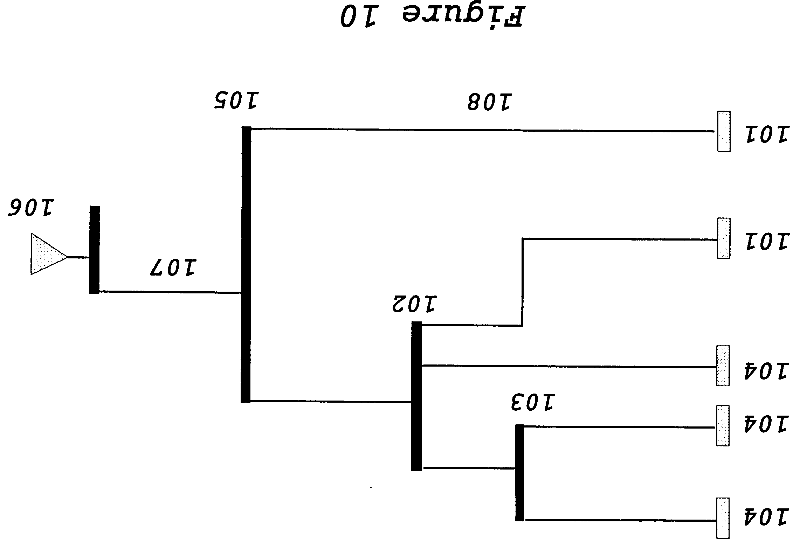

As part of the Cable Network is displayed, the presentation of the network is only a function of the Objects logical connections described by means of the Data Model, not of their geographical locations. The Logically Oriented Cable Drawings or Cable Diagrams, as shown in Figure 10, are drawn as horizontal oriented tree structures where the Cables are represented as horizontal lines and the Cable Nodes (101...106) are represented as vertical lines, connecting one or more Cables. When a pure tree structure is not topologically achievable, the number of Cable crossing will be minimized.

### 3. INTERIOR TRACK NODE CABLE DRAWINGS (Expanded View)

The Interior Track Node Cable Drawings (Expanded View) allows the representation of the Cable Network inside a Track Node : when a view of the Track Node (for instance a Manhole) is displayed, the information on the Cable Network Objects (Cables and Cable Nodes) related to this Track Node is read from the Database. The expanded views of the Track Node is generated from this information and is then displayed. An Interior Track Node Cable Drawing is is a detailed view in the form of a schematic diagram of all the Cables and Cable Nodes which are connected together in a Track Node. The Cables entering the Track Node are drawn at Positions corresponding to their geographical locations and the presentation of the internal network of the Expanded View of a Track Node is, as for it, a function of the logical connection of the Objects. This Type of diagram, which is a "logically correct" view of the contents of a Track Node, integrates the "knowledge" of the network as defined in the Data Model rules.

The geographical locations of the Cable Network inside a Track Node is not available. This implies that the representation of the Track Node must be generated automatically. This is possible under certain conditions (non limitative list) :
· The layout must be correct. All Cables and Cable Nodes must be displayed and they must be connected according to the contain of the Database.
· Cables entering the Track Node (somehow through the wall of the Manhole) must enter the frame of the Expanded View at approximately right locations. This means also that they must enter the border in the same order as in the corresponding Geographical Drawings.
· Cables must be drawn orthogonally.
· Cable Nodes must be drawn with their right symbols including right connections to their connected Cable.
· Cable Nodes must not overlap.
· Cable crossing must be as small as possible.

### 4. CROSS-SECTION VIEWS

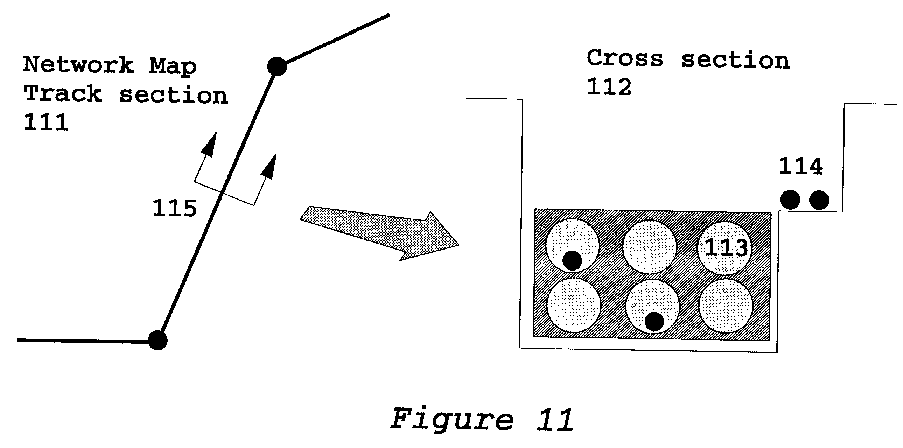

The Cross-Section Views provide a graphic representation of the network in the third dimention. At the Duct Level Cross-Section Drawings apply to either Track Section Duct Section or Manhole. Figure 11 illustrates that a Cross-Section (112) view of, for example an Edge Object (Track Section (111) or Duct Section), is a view (112) in, the direction of the Object. This view only shows the "relative arrangement" and not the precise dimensions or positions of the Object and its contents. Cross-Section Views have a hierarchical structure according to the level of the selected network Object. Therefore the Cross-Section View for a selected Object contains the Cross-Section information that is defined for this Object together with information for any Objects which are positioned hierarchically below this Object : a Track Cross-Section (112) contains Duct Holes (113) and Cables (114). The Cross-Section of the selected object is extracted from the Database and displayed. If the Database has been modified in any way, for example data added, aposition entered or a cable deleted, which affects the Cross-Section displayed, then the Cross-Section display is automatically updated.

### Method for generating drawings

The method for generating Cable Drawings according to the present invention consists in the steps of :
1. Selecting data from the Database,
2. Defining Layout Objects and data
3. Building an internal Layout Structure,
4. Presenting the drawings on the screen.

### 1. THE DATA SELECTION

The purpose of the data selection is to read from the Database structure, all Objects relevant to create a schematic drawing.
a. The first step of the data selection is the area definition :
   · For schematic drawing covering an area (Position Oriented or Logically Oriented Cable Drawings), the input to the Database selection function is an area (defined by a polygon) , or a Track Node defining an area (a zone).
   · For Interior Track Node Cable Drawings (Expanded View), the input is a Track Node.
b. The second step of the data selection is the Type of Objects from the Database to include in the drawing. For instance, at the Cable Network level Cables and Cable Nodes are included. They are positioned by the Track Network. Also Cables crossing the area contour (or passing thru the Track Node), are included, as well as the Cable Nodes, even if they are outside the area contour (or connected to the input Track Node).

### 2. THE LAYOUT OBJECTS DEFINITION

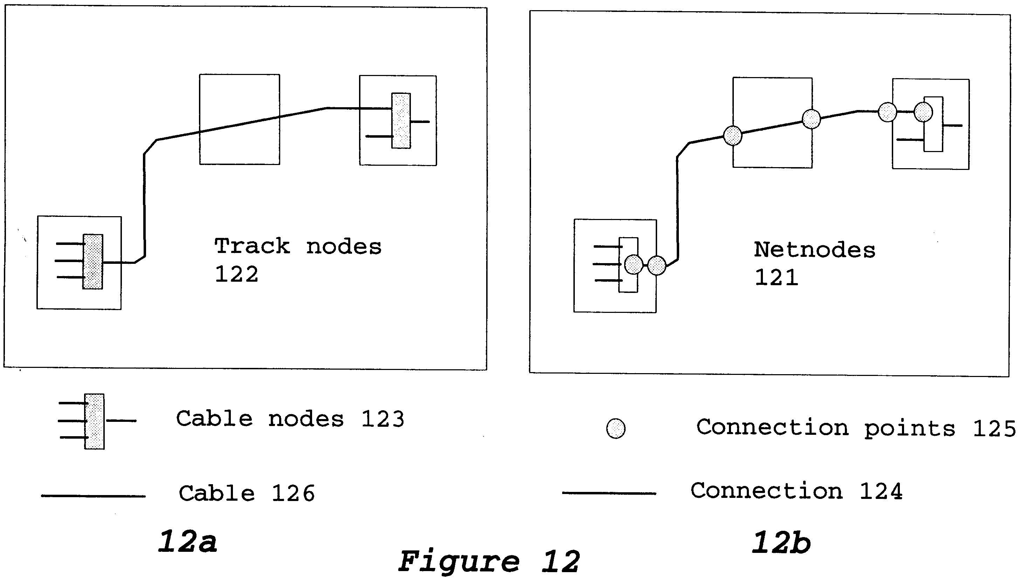

The Cable Drawing application works directly on the Database structure containing the Data Model Object view of the network (Figure 12a). In addition, auxiliary data structures are generated by the Cable Drawing application. The most important of these is the hierarchical Layout Data Structure which is composed of specific Objects which describe in details the layout (Figure 12b) of the schematic drawings including the coordinates of the Cables and the Cable Nodes. These Objects have relations with the regular Objects defined in the Data Model (Cables and Cable Nodes), and vice versa. The Types of Layout Network Objects, illustrated in Figure 12, are :
· Netnode (121)
   This Object is used at several levels in the Layout Data Structure. It may describes the layout of an entire network a Track Node (122) or a Cable Node (123). It does not have its own Position. These are defined by its internal Connections (124) and Connection Points (125).
· Connection (124)
   Connections are the layout part of a Cable (126), both the part of the Cable positioned inside the Track Node and between the Track Nodes (122). Its Position is defined by its Connection Points (125) Position, and by its own internal Positions (coordinates). Each Cable (126) is described by several Connections (124) except Cables internal to Track Nodes, which have only one Connection.
· Connection Points (125)
   These are the End Nodes of the Connection Objects. They usually have a Position (coordinates). For each Cable, there will be one Connection Point (125) at each of its Cable Nodes (123) and one for each place the Cable enters or leaves a Track Node (122).

The Layout Data Structure Objects are removed when the Cable Drawing session terminates. All the information concerning the Layout Structure is generated again each time a graphic must be displayed.

### 3. THE INTERNAL LAYOUT STRUCTURE

### Position Oriented Cable Drawings

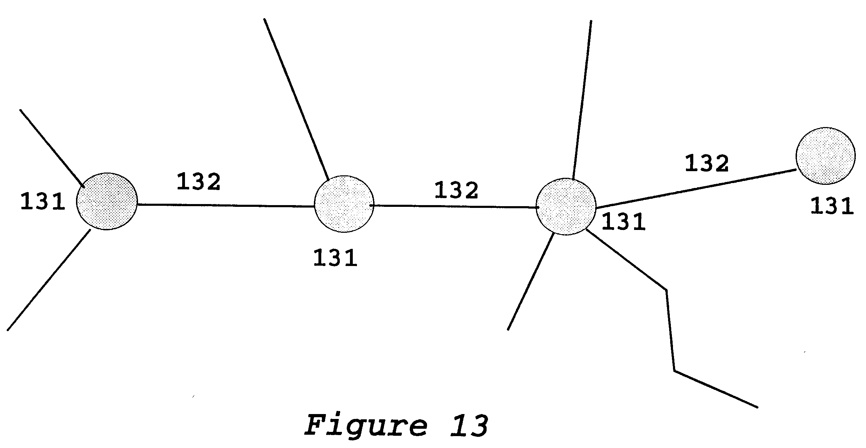

The purpose of this step is to create a Layout Data Structure describing the graphical layout of the Cable Network. The creation of an Layout Data Structure is done in five steps :
a. Find the path of all Cables.
   The Purpose of this step is to create the path for all Cables and Links in the network to be drawn. A path for a Cable or a Link, describes the part of the Track Network by which the Cable or the Link is positioned. It is defined (Figure 13) as an ordered list of all the Track Nodes (131) and Track Sections (132) through which the Cable or Link is passing. In this list, a Track Section will always have a Track Node as its predecessor, and a Track Node as its sucessor. For each Track Section in the list, also the direction of the path relative to the direction of the Track Section is included. Each Track Node and Track Section Object referred to in the path list, get also relations to this path, and the relative directions.
b. Calculate the areas of the Track Nodes and clip the Track Sections accordingly.
   The purpose of this step is to calculate the necessary areas around the Track Node, and prepare the connected Track Sections accordingly. The smallest area around a Track Node is defined as the smallest rectangle, into which all Cables entering the Track Node can be drawn without overlapping each other. In the drawing, the Cables will be drawn as lines parallel to the Track Sections. The size of the area will therefore be a function of a the (user defined) distance between the parallel lines. In order to make the layout better looking, the coordinates of the Track Sections may be slightly modified by this function. If two Track Nodes rectangles, by this definition, overlap, this function replaces them by reduced, non overlapping rectangles. The Cables entering such a Track Node are not drawn as parallel lines, but converge, close to the Track Node, into the Track Node center. The algorithms used during this step are :
   · Modify Track Section
      The coordinates of the Track Section are modified near the Track Node in order to make their Cables entering the Track Node rectangle correctly. A Track Section may be smoothed, and new points may be added.
   · Calculate the Track Node rectangle
      The Track Node rectangle is the smallest rectangle satisfying the following criteria's :
      ■ All Cables positioned by the same Track Section enter the rectangle at the same side.
      ■ Cables positioned by different Track Sections shall not overlap.

      If the Track Node rectangle may overlap neighbor rectangles, the rectangle will be replaced by a reduced non overlapping rectangle.
c. Sort the Cables
   The purpose of this step is to order the Cables for all Track Sections. The reason for this sorting is to increase the readability of the drawings. In the Database, the Cables are positioned by Track Sections, and the Track Sections do not have canonical ordering of their Cables. if the Cables were presented in the drawing in a random order, the drawing will be harder to read. If Cables following consecutive Track Sections were diplayed in random order, this will be confusing, and there may be unnecessary large number of Cables crossing in the Interior Track Node Cable Network. In order to make an optimal result, also the Links that the Cable Position will be sorted. The sort algorithm does not garantee that Cables cannot cross, but the number of crossing will be reduced to a minimum. The algorithm used for sorting the Cables or Links, is the following method :
   · For each Track Node, order the paths passing thru the Node according to the angles of its Track Section.
   · For each Track Section, sort its Cables, according to the Cables's ordering.

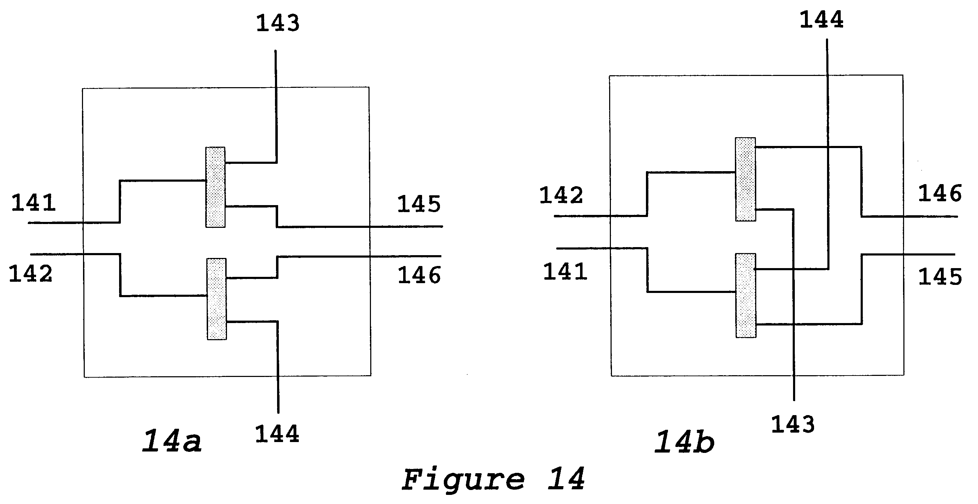

   Figure 14, shows the usefulness of sorting Cables. In the drawing 14a the Cables (141 to 146) are sorted. The number of Cables crossing is reduced (Cables 143 and 144) compared with drawing 14b.
d. Make the Layout Data Structure
   This set is to generate the Layout Data Structure using the methodology and algorithms described previously.
e. Assign coordinates to the Layout Data Structure
   For each Track Section, generates the coordinates for all its Cables, as lines parallel to the presentation of the Track Section. The order of the lines is given by the order of the Cables, established by the sorting function described previously. The Cables will be clipped against the node rectangle. In this function, only coordinates will be made for the parts of the Cables (connections) connecting Track Nodes coordinates for the Interior Track Node parts of the Cable are made by the Interior Cable Drawing function.

### Logically Oriented Cable Drawings

The purpose of this step is to calculate positions of Cable Nodes and Cables according to their logical connections and with the following properties :
· Cable Nodes are drawn as vertical lines,
· Cable Nodes may not overlap,
· Cables are drawn as horizontal lines between two Cable Nodes, if possible,
· If the Cable Network to display has a true tree structure, all Cables are drawn as horizontal lines, consequently no Cables cross each other, and no Cables cross a Cable Node.
· If the Cable Network to display has not a true tree structure, it may be topologically impossible to draw a Cable as a horizontal line. In that case, the Cable will be drawn as two horizontal lines, connected by a vertical Cable line.
· If the Cable Network to display has not a true tree structure, some Cables may cross each other, and Cables may cross Cable Nodes.

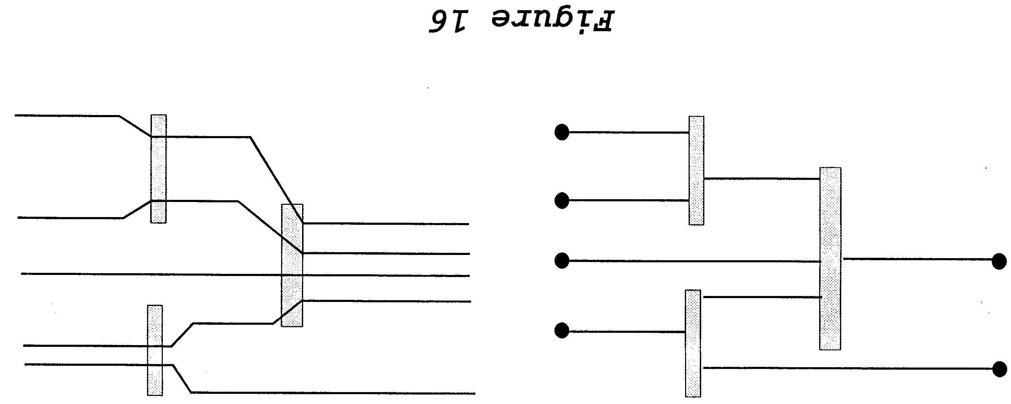

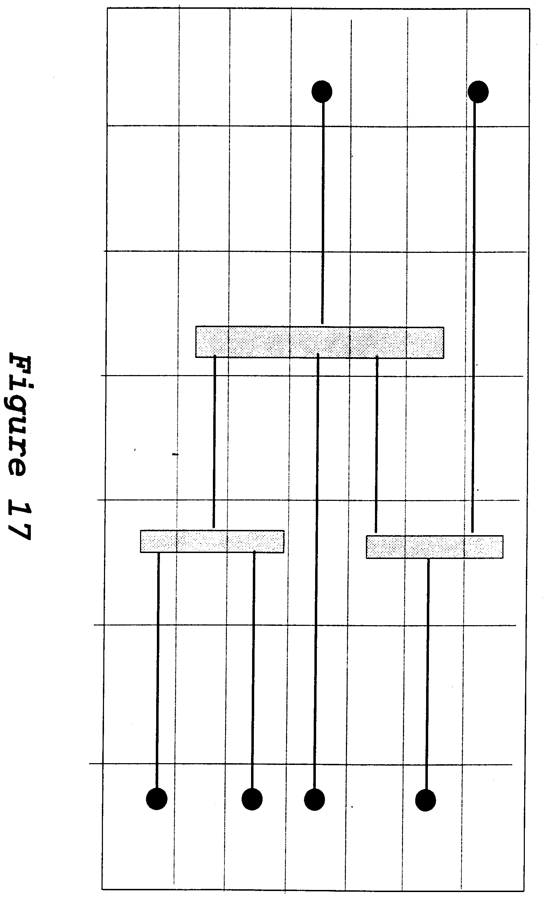

As described above, there are different types of Cable Drawings. They have much in common, but there are also differences concerning their presentation and implementation. A distinction must be made between Logically Oriented Cable Drawings and Interior Track Node Cable Drawings. The main difference concerning the layout is that a Logically Oriented Cable Drawing describes one connected network, comming out from one central Cable Node, while an Interior Track Node Drawing may describe a number of connected networks interior to a Track Node (for example a Mannhole). There are also other differences, concerning the presentation of the networks, and the annotated information, labels and text, which are not the object of the present invention. The method to establish the Layout Structure involves the steps of :
a. Dividing the network into disjoint (non connected) networks
   The network must be divided into disjoint (non connected) networks. This applies only for Interior Track Node Drawings. Concerning Logically Oriented Cable Drawings for Track networks, it is assumed that each drawing consists of one network, defined by one central Node.
b. Making all the paths through each network
   By paths is meant all possible ways of passing through the network. For example, the network in Figure 16 has 5 paths. The paths must be ordered. The order of these paths is used when the final layout of the Logically Oriented Cable Drawing is elaborated to avoid (or minimize) the Cable crossing.
c. Building the Layout Data Structure for each network
   The Layout Structure consists in Netnodes, Connections and Connection Points, as for the Position Oriented Cable Drawings. In order to determine the positions of the layout elements of each Cable and Cable Node, a **Layout Matrix** is built for each network. As illustrated in Figure 17 each element in the Layout Matrix may possess a vertical element (representing a Cable Node) or a horizontal element (representing a Cable). The layout is determined by traversing the network structure from the start Node, gradually building the Layout Matrix and its relations to the network elements. The layout elements are assigned coordinates in a local coordinate system.
d. Assigning location for labels and text
   Labels and text may influence the layout of the Logically Oriented Cable Drawing, so changes must be made to the local coordinates, using the Layout Matrix.Text concerning related Objects is also produced and positioned.

### Interior Track Node Cable Drawings

The algorithms for the Interior Track node Drawings presume a much higher level of automatic layout generation than for the other types of drawings. In the telecommication applications, today, there is no available information about the geographical locations of the Cable network inside Track Nodes. This implies that the Interior Track Node Cable Drawing must be generated automatically. The requirements are listed below. They are of two kinds. the first requirements are absolute, the last ones apply to the readability of the drawing, which must be "as good as possible".
a. Absolute requirements
   · The layout must be correct : all Cables and Cable Nodes must be displayed, and they must be connected according to the contents of the Database.
   · Cables entering the Track Node (somehow through the wall of the Mannhole) must enter the frame of the expanded view at approximately right locations. This means also that they must enter the border in the same order as in the corresponding Position Oriented Cable Drawings.
   · Cables must be drawn orthogonally.
   · Cable Nodes must be drawn with their rigth symbols., including rigth connections to their connected Cables (rigth presentation of "inside" and "outside" connections).
   · Cable Nodes must not overlap.
   · Cables must not overlap, but they may cross each other when necessary.
b. Requirements concerning the readability of the drawings
   · The number of Cable crossing must be as small as possible.
   · The Cables must be drawn with as few lines as possible. This means that the number of corners must be minimized.
   · The requirement above implies that the Cable Nodes must be rotated to an angle which minimizes the number of corners for the connected Cables.
   · Cable Nodes and Cables which are logically connected must be located close to each other.
   · The Cables must be as short as possible.
   · A special case of the requirement above is that the part of the Cable Network which is positioned by a box must be displayed within a rectangle.

The method involves the steps of :
a. Locating the Nodes
   The network is analysed and the Paths through the network are calculated. The Nodes are given a relative location in the drawing, according to their location in the network.
b. Rotating the Nodes
   The Nodes are rotated (0 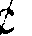 , 90 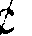 , 180 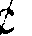 or 270 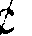 ), according to the direction to their connected Nodes and to the Cables coming in from outside the Track node.
c. Determining the size of the Nodes
   The size of each Cable Node is a function of symbol used to display the Node and of the annotations to be displayed with the Node.
d. Building the Layout Matrix
   In order to route the Cable correctly, a Layout Matrix is built. Cables and Cable Nodes are associated to each element in the Layout Matrix. Cable Nodes which have almost the same horizontal or vertical coordinates will be allocated to the same row of column. One element in the Matrix may contain only one Cable Node, but many Cables.
e. Routing the Cables
   From the location and the rotation of the connected Cable Nodes, there is a limited number of possible routes for each Cable. Each of them are tried out and the one that gives the fewest conflicts is chosen.
f. Determining the size of corridors (group of parallel Cables)
   Many Cables may partly follow the same routes. Therefore, the Matrix rows or columns can get different widths. The widths are function of the number of parallel Cables. At the same time, unnecessary corners are avoided.
g. Calculating final coordinates
   The detailed connection of each Cable to each Cable Node symbol's Connection Point is calculated, and coordinates are assigned to all Cables and Cable Nodes

### 4. PRESENTING THE DRAWINGS ON THE SCREEN

The result of the layout algorithms for Cable Drawings is a Layout Data Structure containing all the coordinate information of the produced drawing, together with the original Data Model Objects. When the drawing are presented the predefined Presentation Rules are applied for each Object in the Database. The Presentation Rules for the Track Network Objects and the Cable Network Objects describe how these Object Types are displayed by help of their related Layout data Structure Objects (Netnodes, Connections, Connection Points), as lines, points symbols, ..etc. Different Presentation Rules apply to the different applications. One set apply to Geographical Cable Drawings, another for Cable Diagrams, ..etc. . The contain of the The Layout Data Structure is, after that, displayed on a screen or printed or plotted on paper using graphical rules and systems well known in the state of the art.

### Base Map application

The "Base Map" application provides functionality for graphical applications to show a background map in the representation of the network. Base Map includes programs for registering and maintenance of background maps. The Base Map is a set of more or less static geographical information. This information will be used to give the user a graphical background view covering the area he is working on. It is assumed that data in the Base Map has minor importance for the organization using the present invention and that other national or regional organizations will provide and maintain data of this type. Therefore import of data from different sources will be an important part of the registering and maintenance apart of the Base Map. The Basemap provides the "geographical framework" or reference for the network Geographical Drawings generated from the Database. This geographical framework is scanned and thus constructed from surveyor, technical, topographical, economic, and development maps. However, it is important to note that scanning the maps does nor imply that the Base Map data has been stored into the system's Database. To be able to make use of the different map sources, the material must refer to a common co-ordinate system. Consequently, each map must go through a transformation process which converts all the map co-ordinates to the Database's own co-ordinate system.

### Network Map application

The "Network Map" application allows to represent a selected geographical area of the telecommunications network. A Network Map is composed of a Base Map and a Geographical Drawing, that means a merge of a Base Map and Objects contained in the Database structure. The Base Map provides the geographical reference for the Objects of the network in the selected area.

### Network Management System

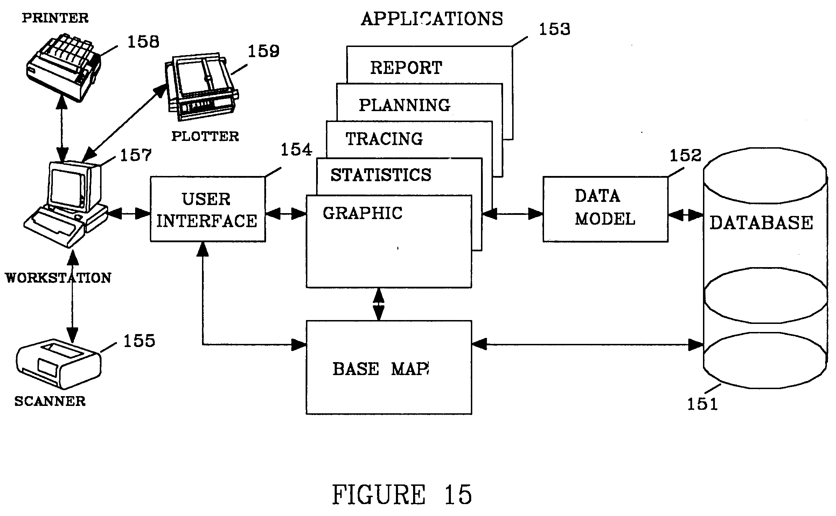

The present invention is an information management method implemented in a data processing system and designed specifically for telecommunication or power networks. Figure 15 describes the general concept of the network Data Model in function of its interactions with the applicative environment. The heart of the system is a relational Database (151) structured according to a logical representation of the network. This logical representation or Data Model (152) determines all the rules which govern the different types of components and their Relationships in the network. In this unique and consitent Database (151) is stored all the information about the location and content of the outside plant, the background geographic maps, detailed drawings, alphanumeric descriptive data ..etc. This Database structure allows the user to design and create, by means of an apropriate interface (154), his own telecommunications business applications (153). The user can scan existing maps or drawings by means of a scanner (155) or manually digitize data with the help of a graphic mouse or pen (156). It can manipulate data in a number of way and represent the network in different contexts, for example in the form of a network map, schematic view, report or work order on a graphic display (157), a printer (158) or a plotter (159).

The data processing system can be configured as a single workstations or as a plurality of workstations interconnected in local networks. Each workstation has a graphic display, a keyboard and one or more pointing devices. They all access common Database server(s) holding the network Data Model. Some special workstations may be designated servers. They provide services accessed by all other workstations. They can be servers for the Database, for special input devices (scanners, ..etc.) and for special output devices (printers, plotters, ..etc.).

## Claims

1. An information management method for an outside plant network, operating in a data processing system, said outside plants comprising edges (11) and nodes (12), edges connecting nodes, and said processing system being endowned with a common and unique database (151), a user interface (154), one or more interconnected workstations (157) with input and output devices such as keyboard, scanner (155), pointing device (156), printer (158), display (157), plotter (159), characterized in that it involves the steps of :
· a, defining network object types and associating said real outside plants to said object types,
· b, defining attributes belonging to each object type and relationships between said different object types,
· c, defining network levels and hierarchical relationships between object types,
· d, associating said objects to said network levels, each of said objects being associated to only one network level,
· e, determining geographical position of said objects,
· f, defining quantitative relationships between said objects,
· g, defining presentation rules for said objects,
· h, determining validation rules,
· i, storing the information generated in all preceding steps in said common and unique database (151).

2. The information management method according to claim 1 characterized in that said position of said objects is determined through the own geographical position of the object or in relation to the position of other objects.

3. The information management method according to claim 2 characterized in that geographical positions are given for nodes objects located at the highest network level and in that all objects inherit their position from the geographical position of said node objects.

4. The information management method according to anyone of the preceding claims characterized in that said quantitative relationships, defined in said step f, between said objects are expressed in term of maximum and minimum values.

5. The information management method according to anyone of the preceding claims characterized in that said presentation rules, defined in said step g, are related to the selection of graphic elements such as symbols, area patterns, colors, line types, text fonts, said selection being made in function of attributes of said objects and type of document.

6. The information management method according to anyone of the preceding claims characterized in that said validation rules, defined in said step h, implies the checking of said object types, attributes and relationships.

7. The information management method according to anyone of preceding claims characterized in that it involves a further step j of selecting said objects according to their position, type, attributes or relationships.

8. The information management method according to anyone of preceding claims characterized in that it involves a further step k of checking errors and the consistency of the network compared with physical observations.

9. The information management method according to anyone of preceding claims characterized in that it involves a further step l of automatically generating statistics indicating the total capacity and free capacity of the network from said objects quantitative Relationships defined in said step f.

10. The information management method according to anyone of preceding claims characterized in that it involves a further step m of automatically tracing objects within a specific path at a given network level.

11. The information management method according to anyone of preceding claims characterized in that it involves a further step n of automatic generation of documents and reports from said database

12. The information management method according to anyone of preceding claims characterized in that it involves the further step o of defining an alternative network and storing correponding objects in said database with a distinctive attribute.

13. The information management method according to anyone of preceding claims characterized in that the further step p of automatically generating graphics, said generation comprising the three steps of :
· q, defining layout objects from objects previously defined and stored in claim 1,
· r, building an internal layout structure,
· s, representing drawings on a screen or on paper by means of a printer or a plotter.

14. The information management method according to claim 13 characterized in that said automatic graphic generation implies that the layout objects and structure are temporarily stored during the graphic application session and are then removed when the session terminates.

15. The information management method according to claim 14 characterized in that said automatic generation in step p includes the representation of the network in different forms :
· position oriented drawings such as geographical drawings (Figure 6), orthogonal drawings (Figures 7 & 8) or semi-geographical drawings (Figure 9),
· logical oriented drawings Figure 10),
· expanded views,
· cross-section views (Figure 11),
· network maps.

16. The information management method according to anyone of the preceding claims characterized in that said outside plant network is a telecommunication network.

17. The information management method according to claim 16 characterized in that the network levels, defined in said step c of claim 1 comprise a track network level (31) - with track nodes and track sections (34) - , a duct network level (32) - with duct nodes and duct sections (35) -, a cable network level (33) - with cables and cable nodes (37) -, a link network level.

18. The information management method according to claim 17 characterized in that the objects inherit their geographical position from node objects at said track network level.

19. The information management method according to claim 18 characterized in that said step q in claim 13 implies the definition of a layout network with netnode (121), connection (124) and connection point (125) layout objects.

20. The information management method according to claim 19 characterized in that said automatic generation of position oriented drawings includes, in said step r of building an internal layout stucture, the steps of :
· finding for all cables the corresponding track section,
· calculating the areas of track nodes and clipping the track sections,
· sorting the cables,
· making a layout data structure,
· assigning coordinates to the layout data structure.

21. The information management method according to claims 13 to 20 characterized in that said step p of automatically generating graphics involves the further step of merging geographical drawings with a geographical map (basemap) previously stored in the database.

22. The information management method according to anyone of claims 13 to 21 characterized in that said automatic generation of logical oriented drawings includes in said step r of building an internal layout stucture, the steps of :
· dividing the network into disjoint networks,
· making and ordering all possible ways of passing through the network,
· building a layout matrix for each network,
· assigning locations for labels and text.

23. The information management method according to claims 13 to 22 characterized in that said automatic generation of expanded views includes in said step r of building an internal layout stucture, the steps of :
· locating nodes,
· rotating nodes,
· determining size of nodes,
· building a layout matrix,
· routing cables,
· determining size of groups of parallel cables,
· calculating final coordinates for all cables and cable nodes.

24. The network information management method according to claims 1 to 15 characterized in that said outside plan network is a power network.
